# EUROPÄISCHE PATENTSCHRIFT

(11) **EP 2 182 569 B1**
(45) Veröffentlichungstag und Bekanntmachung des Hinweises auf die Patenterteilung: **16.01.2013**
(21) Anmeldenummer: 09174437.5
(22) Anmeldetag: 29.10.2009
(51) Int. Cl.: H01M 6/08, H01M 6/52, H01M 10/54

(54) **Verfahren und Vorrichtung zum Verwerten eines elektrochemischen Energiespeichers**
Method and apparatus for recyling of an electrochemical energy storage device
Procédé et appareil pour le recyclage d'un accumulateur d'énergie électrochimique

(30) Priorität: 29.10.2008 DE 102008053690
(43) Veröffentlichungstag der Anmeldung: 05.05.2010
(73) Patentinhaber: REDUX Technology GmbH, 27568 Bremerhaven (DE)
(72) Erfinder: Rausch, Sven, 28209 Bremen (DE); Molchin, Thure, 28213 Bremen (DE); Nestler, Wolfgang, 27711 Osterholz-Scharmbeck (DE); Nestler, Arne, 27711 Osterholz-Scharmbeck (DE)
(74) Vertreter: Tappe, Udo

(56) Entgegenhaltungen:
- EP-A2- 0 521 242
- EP-A2- 1 408 575
- WO-A1-94/25167
- WO-A2-2009/087323
- FR-A1- 2 790 368
- US-A- 4 018 567

## Beschreibung

Die Erfindung betrifft ein Verfahren zum Verwerten eines elektrochemischen Energiespeichers, insbesondere einer Batterie, bei dem der Energiespeicher eingesammelt wird, bei dem der Energiespeicher einer Verarbeitung zum Wiedergewinnen einer oder mehrerer Komponenten des Energiespeichers zugeführt wird, und bei dem vor der Verarbeitung ein Isolierelement zum Abdecken eines Abschnittes des Energiespeichers im Bereich eines Überganges von einem ersten Pol zu einem von dem ersten Pol getrennten zweiten Pol des Energiespeichers mindestens teilweise entfernt wird. Des Weiteren betrifft die Erfindung eine Vorrichtung zum Verwerten eines elektrochemischen Energiespeichers, insbesondere einer Batterie, mit einem Abschnitt im Bereich eines Überganges von einem ersten Pol zu einem von dem ersten Pol getrennten zweiten Pol des Energiespeichers, wobei der Abschnitt mittels eines Isolierelementes abgedeckt ist, und ein Entfernungsmittel zum mindestens teilweisen Entfernen des Isolierelementes im Bereich des Abschnittes vorgesehen ist.

Verbrauchte elektrochemische Energiespeicher werden eingesammelt, da die elektrochemischen Energiespeicher wertvolle Rohstoffe und/oder toxische Schwermetalle wie beispielsweise Blei, Kadmium oder Quecksilber enthalten können. Es werden insbesondere Gerätebatterien eingesammelt und zur Weiterverarbeitung verschiedenen Verfahren zugeführt. Hierbei fallen unter den Begriff der Gerätebatterien unter anderem Alkali-Mangan-Batterien, Zink-Kohle-Batterien, Nickel-Metallhydrid-Akkumulatoren, Nickel-Kadmium-Akkumulatoren, Blei-Akkumulatoren, Zink-Luft-Zellen, Lithium-Primärbatterien, Lithium-Ionen-Akkumulatoren, Lithium-Polymer-Akkumulatoren, Silberoxid-Batterien und Quecksilberbatterien. Gerätebatterien haben beispielsweise folgende Bauformen: Micro, Mignon, Baby, Mono, 9V-Block bzw. E-Block, Flachbatterie, Pack's. Vorzugsweise weisen Gerätebatterien eine zylindrische oder eine im Wesentlichen rechteckige Gestalt auf.

Für die Weiterverarbeitung der eingesammelten elektrochemischen Energiespeicher sind thermische Behandlungen bekannt, bei denen in einem ersten Schritt störende Arten von elektrochemischen Energiespeichern, wie beispielsweise Nickel-Kadmium-Akkumulatoren oder Lithium-Zellen manuell aussortiert werden. Die verbleibenden elektrochemischen Energiespeicher werden sodann in einem speziellen Ofen verarbeitet, wobei eine besondere Abgasreinigung eingesetzt wird. Als ein entsprechendes Verfahren ist beispielsweise das BATREC-Verfahren (Proceedings International Battery Recycling Congress 1995, 1997), CHEMTEC-Verfahren (Proceedings International Battery Recycling Congress 2002), CITRON-Verfahren (Proceedings International Battery Recycling Congress 1998, 1999), VALDI-Verfahren (Proceedings International Battery Recycling Congress 2001) und ZINCEX-Verfahren (Proceedings International Battery Recycling Congress 2007) bekannt. Je nach eingesetztem Verfahren kann Stahl, Manganoxid, Eisen-Mangan-Legierungen, Zink oder Zinkoxid zurück gewonnen werden.

Weiter sind hydrometallurgische Verfahren, wie beispielsweise das REVATECH-Verfahren (Proceedings International Battery Recycling Congress 1999), ZIMAVAL-Verfahren (Proceedings International Battery Recycling Congress 1996), BATENUS-Verfahren (Proceedings International Battery Recycling Congress 1995) und RECUPLY-Verfahren (Proceedings International Battery Recycling Congress 2005) bekannt, wobei bisher lediglich das REVATECH-Verfahren eingesetzt und betrieben wird. Hierbei wird das Gemisch des elektrochemischen Energiespeichers nach einer Zerkleinerung in Säuren gelöst und die einzelnen Metalle als Salze beziehungsweise nach einer Elektrolyse als reine Metalle beziehungsweise Metalloxid wiedergewonnen.

Ferner ist es bekannt, nach einer automatischen Sortierung der elektrochemischen Energiespeicher beispielsweise nach dem SORBAREC-Verfahren (Proceedings International Battery Recycling Congress 1998) oder dem EUROBATTRI-Verfahren (Proceedings International Battery Recycling Congress 1997) elektrochemisch sortenreine Fraktionen zu erhalten, die in Abhängigkeit von der Art der elektrochemischen Energiespeicher zum Wiedergewinnen von Komponenten der Energiespeicher einem besonderen Verfahren zugeführt werden. So können beispielsweise Nickel-Kadmium-Akkumulatoren mittels eines Verfahrens der S.N.A.M. (Proceedings International Battery Recycling Congress 1997) oder ACCUREC (Proceedings International Battery Recycling Congress 1998) sowie Zink-Kohle-Batterien nach dem DK-Verfahren (Proceedings International Battery Recycling Congress 2007) oder Imperial-Smelter-Prozess (Proceedings International Battery Recycling Congress 1998) verarbeitet werden. Alkali-Mangan-Batterien werden nach dem REDUX-Verfahren (Stiftung Gemeinsames Rücknahme System Batterien, Erfolgskontrolle 2001 bis 2006) oder dem GMA-Verfahren (Stiftung Gemeinsames Rücknahme System Batterien, Erfolgskontrolle 2003) zerkleinert und nach anschließender Abtrennung der Stahlmäntel einem Zink-Wälzoxid-Prozess (Stiftung Gemeinsames Rücknahme System Batterien, Erfolgskontrolle 2000, 2001) zugeführt.

Des Weiteren ist aus der EP 0 521 242 A2 ein Verfahren zum Entfernen einer Kunststoffummantelung mittels einer Wärmebehandlung in einem Ölbad bekannt.

Der WO 94 25167 A1 ist ein Verfahren zum Entfernen einer Kunststoffummantelung zu entnehmen, bei dem der Energiespeicher mit der Kunststoffummantelung durch eine Stickstoffflüssigkeit zum Schockgefrieren geführt wird, um anschließend zum Abtrennen der Kunststoffummantelung von dem Batteriegehäuse gegen eine Wand geschleudert zu werden.

Weiter ist aus der WO 2009/087323 A2 ein Verfahren zum Zerlegen einer Batterie bekannt.

In der EP 1 408 575 A2 wird auf eine Vorentladung vor einem Öffnen eines Batteriegehäuses zum Wiederverwerten als vorteilhaft hingewiesen.

Bei den bekannten Verfahren zum Verwerten eines elektrochemischen Energiespeichers ist jedoch von Nachteil, dass die elektrochemischen Energiespeicher oftmals erhebliche Restladungen aufweisen. Hierdurch besteht die Gefahr, dass beim Zerkleinern der elektrochemischen Energiespeicher die durch einen Separator getrennten Kathoden- und Anodenmassen vermischt werden und unkontrolliert miteinander reagieren. Hierdurch kann sich das Gemisch beispielsweise im Falle von Alkali-Mangan-Batterien auf Temperaturen bis zu 160 C° erwärmen. Dies führt wiederum dazu, dass das in den Alkali-Mangan-Batterien enthaltende Quecksilber verdampft. Dieses ist insofern von Nachteil, da der toxische Quecksilberdampf unter hohen Kosten mit einem großen technischen Aufwand aus dem Abdampfstrom abgetrennt werden muss. Weiterhin ist von Nachteil, dass aufgrund der hohen Temperaturen Wasser verdampft, welches sich mit dem bei der Zerkleinerung der elektrochemischen Energiespeicher entstehenden Staub vermischt und in den Leitungen der entsprechenden Vorrichtung zu festen Anhaftungen führt. Hierdurch besteht die Gefahr, dass die Funktionstüchtigkeit der Vorrichtung gefährdet ist und/oder regelmäßige Wartungsarbeiten zum Entfernen der Anhaftungen notwendig sind. Des Weiteren führen die hohen Temperaturen in Kombination mit alkalischen Elektrolyten zu einer starken Korrosion der Vorrichtung, beispielsweise bei einem Zerkleinerungsaggregat. Dies führt zu einem hohen Wartungs-, Reparatur- und Kostenaufwand.

Des Weiteren führt die Restladung von elektrochemischen Energiespeichern aufgrund der Vermischung und der unkontrollierten Reaktion der Kathoden- und Anodenmasse dazu, dass eine Gewinnung von marktüblichen beziehungsweise sortenreinen Sekundärrohstoffen mit den bekannten Verfahren und Vorrichtungen nicht realisierbar ist. So ergeben beispielsweise die Inhaltsstoffe von Zink-Kohle- und Alkali-Mangan-Batterien eine Kombination aus Eisen, Zink und Mangan. Jedoch gilt in Verfahren, wie beispielsweise in der Hochofen-Stahlproduktion sowie Ferromangan-Herstellung, Zink als Störstoff, während Stahl und Manganoxid beispielsweise in Recyclingverfahren für zinkhaltige Reststoffe in der Schlacke verloren gehen.

Hiervon ausgehend ist es das der Erfindung zugrunde liegende Problem, ein Verfahren und eine Vorrichtung der Eingangs genannten Art derart weiterzuentwickeln, dass eine möglichst vollständige Entladung des elektrochemischen Energiespeichers realisierbar und damit die Wiedergewinnung einer oder mehrerer Komponenten vereinfacht ist.

Das der Erfindung zugrunde liegende Problem wird dadurch gelöst, dass eine elektrisch leitenden Verbindung zwischen einem ersten Pol und einem von dem ersten Pol getrennten zweiten Pol zum kontrollierten Entladen des Energiespeichers hergestellt wird, wobei zum Herstellen der elektrischen Verbindung ein Granulat eingesetzt wird. Ferner weist die eingangs genannte Vorrichtung zur Lösung eine Entladeaufnahme zum Aufnehmen eines oder mehrerer Energiespeicher und mit einem elektrisch leitfähigen Granulat auf.

Die Erfindung ist gemäß der Ansprüche 1, 9 und 16 charakterisiert.

Die beiden voneinander getrennten Pole des Energiespeichers weisen ein Isolierelement auf, welches beispielsweise als eine Kunststofffolie ausgebildet ist. Hierbei dient das Isolierelement dazu, das Entstehen eines Kurzschlusses zwischen dem ersten Pol und dem zweiten Pol zu vermeiden. Aufgrund des mindestens teilweisen Entfernens des Isolierelementes wird eine Entladung des Energiespeichers erheblich erleichtert. Somit ist gewährleistet, dass die Restladung des Energiespeichers vor einer Verarbeitung zum Wiedergewinnen einer oder mehrerer Komponenten des Energiespeichers abführbar ist. Aufgrund der im Wesentlichen vollständigen Entladung des Energiespeichers wird eine einfache mechanische Zerlegung des Energiespeichers in seine Komponenten ermöglicht.

Nach einer Weiterbildung des erfindungsgemäßen Verfahrens wird das Isolierelement mindestens eines Energiespeichers aufgrund mehrmaliger Stürze des Energiespeichers auf ein Schleifmittel und/oder andere Energiespeicher abgeschliffen. Herab stürzende oder herabfallende Energiespeicher beispielsweise in der Form von Gerätebatterien fallen vorrangig auf die Kanten des Energiespeichers. Hierdurch wird das Isolierelement insbesondere im Bereich der Kanten des Energiespeichers abgeschliffen. Dabei wird die Schleifwirkung durch die Verwendung eines Schleifmittels verstärkt.

Vorzugsweise wird das Isolierelement in einer rotierenden Trommel mit an der Innenumfangsfläche angeordnetem Schleifmittel, insbesondere mit zusätzlichen Mitnehmerelementen und/oder Schleifelementen, abgeschliffen. Demnach werden ein oder mehrere Energiespeicher einer rotierenden Trommel zugeführt, deren Innenwand mit einem Schleifmittel, beispielsweise in der Art eines Schleifpapiers, ausgestattet ist. Aufgrund der rotierenden Bewegung der Trommel werden die Energiespeicher beständig durcheinander gemischt und fallen fortlaufend aufeinander und/oder auf das Schleifmittel. Hierbei kann die Schleifwirkung durch an der Innenumfangsfläche angeordnete Mitnehmerelemente und/oder Schleifelemente verstärkt werden. Es können auch zusätzlich oder alternativ lose Schleifsteine mit in die Trommel gegeben werden.

Nach einer weiteren Ausführungsform wird ein dem Abschnitt zugeordneter Spalt aufgrund des Entfernens des Isolierelementes mindestens teilweise freigelegt. Der erste Pol und der zweite Pol des Energiespeichers sind in der Regel mittels eines Spaltes voneinander getrennt. Dieser Spalt wird zur Vermeidung eines Kurzschlusses mittels des Isolierelementes abgedeckt. Hierbei kann das Isolierelement auch innerhalb des Spaltes und zwischen dem ersten Pol und dem zweiten Pol angeordnet sein. Hierdurch dient das Isolierelement nicht nur zum Isolieren der beiden Pole gegenüber der Umwelt, sondern auch der Pole gegeneinander. Weiter kann der Spalt im Bereich einer Kante des Energiespeichers angeordnet sein. Aufgrund einer mindestens teilweisen Freilegung des Spaltes wird das Entladen des Energiespeichers weiter erleichtert.

Es wird eine elektrisch leitende Verbindung zwischen dem ersten Pol und dem zweiten Pol zum kontrollierten Endladen des Energiespeichers hergestellt. Erst aufgrund der Herstellung der elektrisch leitenden Verbindung wird der Energiespeicher entladen, wobei die Herstellung dieser Verbindung aufgrund der mindestens teilweisen Entfernung des Isolierelementes erheblich erleichtert ist. So ist beispielsweise bei einem mindestens teilweise freigelegten Spalt zwischen den beiden Polen lediglich ein sehr geringer Abstand zu überbrücken. Hierbei erfolgt das Entladen auf eine kontrollierte Art und Weise und nicht etwa in der Form eines einfachen Kurzschlusses, um die Entstehung von hohen Temperaturen bei einem Kurzschluss und die sich daraus ergebenen Nachteile zu vermeiden. Die Herstellung einer elektrisch leitenden Verbindung zwischen dem ersten Pol und dem zweiten Pol zum kontrollierten Entladen des Energiespeichers ist insbesondere bei Batteriepacks wie beispielsweise Handy-Akkus, Akkuschrauber-Akkus und dergleichen mehr von besonderem Vorteil. So ist bei

Batteriepacks ein Entfernen des Isolierelementes nicht notwendig was jedoch außerhalb des Schutzumfungs der Ansprüche liegt. Vielmehr liegen bei derartigen Batteriepacks die Pole bereits frei und weisen einen zum Herstellen einer elektrisch leitenden Verbindung hinreichend kleinen Abstand auf.

Vorzugsweise wird die elektrisch leitende Verbindung zum Erreichen einer im Wesentlichen vollständigen Entladung über mehrere Tage aufrechterhalten. Hierdurch ist einerseits eine allmähliche und kontrollierte Entladung des Energiespeichers realisierbar und andererseits eine im Wesentlichen vollständige Entladung des Energiespeichers gewährleistet.

Zum Herstellen der elektrisch leitenden Verbindung wird ein, insbesondere mäßig -leitfähiges, Granulat, vorzugsweise Koksgrieß, eingesetzt. Hierbei ist unter einem Granulat ein körniges oder pulverförmiges, insbesondere leicht schüttbares, Material zu verstehen. Es kann aber auch jedes andere zum Herstellen einer elektrisch leitenden Verbindung geeignete kleinteilige Material eingesetzt werden. Das Granulat kann in Abhängigkeit von der Körnung eine unterschiedliche Leitfähigkeit aufweisen. So kann ein Granulat mit einer gröberen Körnung eine kleinere elektrische Leitfähigkeit aufweisen als ein Granulat mit einer kleineren Körnung. Hierdurch ist für eine bestimmte Streckenlänge der elektrisch leitenden Verbindung ein vergleichbarer Gesamtwiderstand bei der Verbindung von Granulaten unterschiedlicher Körnung realisierbar, da bei dem Granulat mit der feineren Körnung eine größere Anzahl von Übergängen von einem Granulatkorn zum nächsten gegeben ist, wodurch der Gesamtwiderstand erhöht wird. Vorzugsweise weist das Granulat, insbesondere ein einzelnes Granulatkorn, einen derartigen elektrischen Widerstand auf, dass eine kontrollierte Entladung des Energiespeichers unter Vermeidung eines Kurzschlusses herstellbar ist. Als Granulatmaterial kann Kohlenstoff wie beispielsweise Graphit oder Koksgrieß eingesetzt werden, welches kostengünstig zu beschaffen ist und die erforderlichen elektrischen Leitfähigkeitseigenschaften aufweist.

Gemäß einer Weiterbildung wird die Körnung des Granulates entsprechend dem Spalt gewählt. Somit ist die elektrisch leitende Verbindung dadurch herstellbar, dass ein einzelnes Granulatkorn zumindest teilweise in den mindestens teilweise freigelegten Spalt zwischen dem ersten Pol und dem zweiten Pol unter gleichzeitiger Berührung des ersten und zweiten Pols eindringt.

Vorzugsweise wird der Energiespeicher im Wesentlichen von dem Granulat umgeben, wobei das Granulat verdichtet werden kann. Hierdurch ist auf einfache Weise gewährleistet, dass die elektrisch leitende Verbindung zwischen dem ersten Pol und dem zweiten Pol hergestellt wird. Demnach kann der Energiespeicher einfach mit dem Granulat überschüttet werden, welches eine Automatisierung erlaubt und somit ein kostenaufwendiges manuelles Entladeverfahren vermieden wird. Durch ein Verdichten des Granulats, beispielsweise mittels Rütteln und/oder Beschweren, wird die Entstehung einer leitenden Verbindung noch weiter begünstigt.

Entsprechend einer Weiterbildung wird ein Gehäuse des Energiespeichers zum mechanischen Separieren wenigstens eines Teils seiner Komponenten geschwächt. Augrund der Schwächung des Gehäuses wird die nachfolgende Separierung der Komponenten des Energiespeichers erheblich erleichtert.

Vorzugsweise wird mindestens eine Nut und/oder ein Schlitz längs in Richtung des Energiespeichers, insbesondere auf zwei voneinander abgewandten Seiten des Energiespeichers, in einer Gehäusewand des Gehäuses hergestellt. Eine Nut oder ein Schlitz in der Gehäusewand des Gehäuses kann auf einfache Weise hergestellt werden und führt zu einer effektiven Schwächung des Gehäuses. Hierbei kann die Gehäusewand des Energiespeichers zum Herstellen der Nut und/oder des Schlitzes mindestens teilweise angeschnitten, aufgetrennt, durchstanzt und/oder aufgefräst werden. Derartige Verfahren sind bewährt und kostengünstig durchzuführen. In Abhängigkeit von der Größe und/oder Art des Energiespeichers kann dieser mehrere Nuten und/oder Schlitze in Längsrichtung und/oder in axialer Richtung des Energiespeichers aufweisen. Hierbei können die Nuten und/oder Schlitze gleichmäßig um den Umfang des Energiespeichers verteilt sein. Insbesondere kann der Energiespeicher zwei, drei oder mehr Nuten und/oder Schlitze aufweisen.

Nach einer weiteren Ausführungsform wird das Gehäuse versprödet. Hierdurch ist eine effektive Schwächung des Gehäuses des Energiespeichers herstellbar. Vorzugsweise wird der Energiespeicher gefroren, insbesondere schockgefroren. Derartige Verfahren zum Verspröden von Gegenständen sind seit langem bewährt und erlauben eine sehr effektive Schwächung des Gehäuses.

Entsprechend einer Weiterbildung wird das Gehäuse von den innerhalb des Gehäuses angeordneten Komponenten des Energiespeichers abgetrennt, wobei vorzugsweise der Energiespeicher in seine Komponenten zerfällt. Somit ist eine sehr einfache und effektive Separierung der Komponenten des Energiespeichers realisierbar, indem das Gehäuse vom Innenleben des Energiespeichers abgelöst wird.

Vorzugsweise wird der Energiespeicher zum Abtrennen des Gehäuses einem Kraftstoß, insbesondere zum abrupten Beschleunigen und/oder zum abrupten Abstoppen des Energiespeichers, ausgesetzt. Somit zerfällt der Energiespeicher aufgrund eines hinreichend großen Kraftstoßes in seine Komponenten. Hierbei wird auf den Energiespeicher mittels des Kraftstoßes ein Impuls übertragen. Beispielsweise kann ein ruhender Energiespeicher mittels eines Schlagelementes abrupt beschleunigt und hierdurch zugleich in seine einzelnen Komponenten zerschlagen werden. Des Weiteren kann der Energiespeicher zunächst auf eine hinreichende Geschwindigkeit beschleunigt werden und der beschleunigte Energiespeicher sodann mittels eines Stoppelementes abrupt gestoppt werden. Hierbei ist die Aufprallenergie hinreichend groß, so dass der Energiespeicher wiederum in seine Komponenten zerfällt.

Gemäß einer weiteren Ausführungsform wird das Gehäuse des Energiespeichers, insbesondere entlang der mit einer Nut und/oder einem Schlitz versehenen Gehäusewand, mittels eines Spaltelementes von den innerhalb des Gehäuses angeordneten Komponenten abgelöst. Hierdurch ist ein mechanisches Separieren der Komponenten des Energiespeichers realisierbar, wobei gleichzeitig die einzelnen Komponenten geschont und nicht unnötig vermischt werden.

Vorzugsweise wird das Ablösen des Gehäuses mittels Aufbrechen, Aufbiegen und/oder Aufbördeln der Gehäusewand realisiert. Derartige Verfahren und Techniken sind seit langem bewährt und kostengünstig durchzuführen.

Nach einer Weiterbildung werden die Komponenten mittels eines Trennmittels und/oder Abscheidmittels voneinander getrennt. Somit werden die Komponenten des Energiespeichers voneinander separiert und können als Sekundärrohstoffe der Wiederverwertung zugeführt werden. Hierbei können die Komponenten in Abhängigkeit von der Größe sortiert und/oder mittels Sieben voneinander getrennt werden.

Vorzugsweise werden mehrere eingesammelte Energiespeicher vor und/oder nach dem Entfernen des Isolierelementes, insbesondere nach Größe und/oder Bauart, sortiert.

Nach einer Weiterbildung der erfindungsgemäßen Vorrichtung ist das Entfernungsmittel als eine rotierbare Trommel mit einem an der Innenumfangsfläche der Trommel angeordneten Schleifmittel ausgebildet. Eine derartige Trommel ist kostengünstig herzustellen und, insbesondere mittels eines elektrischen Antriebes, zu betreiben. Vorzugsweise weist das Entfernungsmittel innerhalb der Trommel Mitnehmerelemente und/oder Schleifelemente auf. Hierbei sind die Mitnehmerelemente an der Innenumfangsfläche der Trommel angeordnet und derart gestaltet, dass diese einen oder mehrere Energiespeicher mindestens ein Stück in Umlaufrichtung der rotierbaren Trommel mitnehmen können. Die Schleifelemente können ebenfalls an der Innenumfangsfläche der Trommel angeordnet sein und in den Innenraum der Trommel hineinragen, wodurch ein Abschleifen des Isolierelementes aufgrund der hierdurch zur Verfügung stehenden zusätzlichen Schleifkontakte begünstigt wird.

Entsprechend einer weiteren Ausführungsform weist diese eine Entladeaufnahme zum Aufnehmen eines oder mehrerer Energiespeicher und eines elektrisch leitfähigen Granulats auf, wobei vorzugsweise der Entladeaufnahme ein Verdichtungsmittel, insbesondere ein Rüttelelement und/oder eine Druckplatte, zum Verdichten des Granulats zugeordnet ist. Hierbei kann die Entladeaufnahme als ein Behältnis ausgebildet sein, wodurch die mit dem Granulat vermischten Energiespeicher für die Zeitdauer des Entladevorganges beispielsweise transportierbar sind, um gegebenenfalls einem Lager zugeführt zu werden. Vorzugsweise weist die Vorrichtung ein Trennungsmittel, beispielsweise ein Sieb, zum Trennen des Energiespeichers von dem Granulat auf. Hierdurch sind die Energiespeicher auf einfache Weise von dem Granulat trennbar.

Gemäß einer Weiterbildung weist die erfindungsgemäße Vorrichtung ein Präparationsmittel zum Schwächen des Gehäuses des Energiespeichers auf. Hierdurch ist eine einfache mechanische Separation der Komponenten des Energiespeichers realisierbar. Vorzugsweise ist das Präparationsmittel als ein Auftrennelement, insbesondere eine Säge, eine Fräse, eine Klinge, eine Stanze, und/oder ein Läser, zum mindestens teilweisen Anschneiden, Auftrennen, Durchstanzen und/oder Auffräsen der Gehäusewand des Gehäuses des Energiespeichers ausgebildet. Derartige Auftrennelemente sind seit langem bewährt und erlauben eine kostengünstige und effektive Schwächung des Gehäuses des Energiespeichers.

Entsprechend einer weiteren Ausführungsform ist das Präparationsmittel als ein Gefrierelement zum Gefrieren, insbesondere Schockgefrieren, des Energiespeichers ausgebildet. Derartige Gefrierelemente sind ebenfalls seit langem bewährt und erlauben eine besonders effektive Schwächung des Gehäuses durch Versprödung.

Vorzugsweise weist die Vorrichtung ein Separationsmittel zum Abtrennen des Gehäuses von den innerhalb des Gehäuses angeordneten Komponenten des Energiespeichers auf. Aufgrund eines solchen Separationsmittels ist eine einfache mechanische Separation der einzelnen Komponenten des Energiespeichers realisierbar.

Nach einer Weiterbildung ist das Separationsmittel als ein Kraftstoßgeber, insbesondere als ein Beschleunigungselement und/oder eine Prallplatte, zum Abtrennen des Gehäuses ausgebildet. Ein derartiger Kraftstoßgeber ist einfach und kostengünstig herzustellen. Zudem ist eine einfache Separation der Komponenten des Energiespeichers realisierbar.

Gemäß einer weiteren Ausführungsform ist das Bescheunigungselement als ein, insbesondere elektrisch angetriebenes, Schwungrad ausgebildet, wobei vorzugsweise an dem Schwungrad ein Mitführelement zum Beschleunigen des Energiespeichers angeordnet ist. Ein derartiges Schwungrad lässt sich leicht herstellen und kann derart gestaltet sein, dass der Energiespeicher bereits aufgrund des Kontaktes mit dem Mitführelement, verursacht durch ein abruptes Beschleunigen, in seine Komponenten zerfällt. Hierbei entspricht das Mitführelement einem Schlagelement, dass dem Energiespeicher einen derartigen Schlag versetzt, dass dieser zerfällt. Das Schwungrad kann aber auch derart gestaltet sein, dass der Energiespeicher zunächst mittels des Mitführelementes auf eine bestimmte Geschwindigkeit beschleunigt wird, wobei der beschleunigte Energiespeicher sodann mittels einer Prallplatte abrupt gestoppt wird. Hierbei ist die Aufprallenergie hinreichend groß, so dass der Energiespeicher mindestens teilweise in seine Komponenten zerfällt.

Vorzugsweise weist das Beschleunigungselement ein Zuführelement, insbesondere einen Schlagkolben, zum Zuführen des Energiespeichers in Richtung des Schwungsrades auf. Hierbei kann die Funktion des Zuführelementes, beispielsweise mittels einer Steuerung, derart mit dem Schwungrad gekoppelt sein, dass aufgrund des Zuführens des Energiespeichers in Richtung des Schwungrades ein Mitnehmen mit dem Mitführelement gewährleistet ist. Alternativ kann der Schlagkolben als ein Schlagelement eingesetzt werden, wobei der Energiespeicher einen hinreichend großen Kraftstoß erhält, so dass dieser in seine einzelnen Komponenten zerfällt.

Nach einer Weiterbildung ist das Separationsmittel als ein Spaltelement zum Ablösen des Gehäuses von den innerhalb des Gehäuses angeordneten Komponenten des Energiespeichers entlang der mindestens teilweise angeschnitteten, aufgetrennten, durchstanzten, und/oder aufgefrästen Gehäusewand ausgebildet. Ein solches Spaltelement erlaubt eine einfache mechanische Separierung mindestens eines Teils der Komponenten des Energiespeichers, wobei gleichzeitig gewährleistet ist, dass die einzelnen Komponenten nicht unnötig beschädigt und/oder vermischt werden.

Vorzugsweise ist das Spaltelement als ein, insbesondere an einer rotierenden Nocke angeordneter, Keil oder als eine drehbare Spaltschaufel ausgebildet. Derartige Spaltelemente sind einfach und kostengünstig herstellbar und gewährleisten gleichzeitig ein zuverlässiges Abtrennen des Gehäuses von den übrigen Komponenten des Energiespeichers.

Gemäß einer weiteren Ausführungsform weist die Vorrichtung ein Trennmittel, insbesondere ein Sieb und/oder ein Abscheidmittel, insbesondere einen Magnetabscheider, zum Trennen mindestens einer ersten Komponente und/oder einer zweiten Komponente von den übrigen Komponenten des Energiespeichers auf. So kann beispielsweise bei Alkali-Mangan-Batterien das feine Manganoxid mittels Absieben von den übrigen Komponenten abgetrennt werden, während das als ein Stahlmantel ausgebildete Gehäuse mittels eines Magnetabscheiders entfernt wird.

Von besonderem Vorteil ist die Verwendung einer nach dem erfindungsgemäßen Verfahren und/oder mittels der erfindungsgemäßen Vorrichtung erhaltenen Komponente zum Herstellen von Produkten, insbesondere Batterien. Hierbei sind die wieder gewonnenen Komponenten als sortenreiner Sekundärrohstoff einsetzbar, wodurch der Einsatz von kostenintensiven Primärrohstoffen mindestens reduzierbar ist. Hierdurch sind kostengünstige Produkte herstellbar und die Rohstoffressourcen werden geschont.

Nachfolgend wird das erfindungsgemäße Verfahren und die erfindungsgemäße Vorrichtung anhand von Ausführungsbeispielen gemäß der folgenden Figuren näher erläutert. Es zeigen:
- Fig. 1: einen Energiespeicher vor und einen Energiespeicher nach Durchführung des erfindungsgemäßen Verfahrens im Längsschnitt,
- Fig. 2: ein Separationsmittel für einen Energiespeicher nach Durchführung des erfindungsgemäßen Verfahrens gemäß Fig. 1 in einer perspektivischen Ansicht,
- Fig. 3: das Separationsmittel gemäß Fig. 2 in einer Seitenansicht,
- Fig. 4: das Separationsmittel gemäß Fig. 2 in einer Draufsicht,
- Fig. 5: ein zweites Separationsmittel in einer Seitenansicht,
- Fig. 6: das Separationsmittel gemäß Fig. 5 in einer Draufsicht,
- Fig. 7: ein weiteres Separationsmittel in einer ersten Funktionsstellung in einer perspektivischen Ansicht,
- Fig. 8: das Separationsmittel gemäß Fig. 7 in einer Frontansicht,
- Fig. 9: das Separationsmittel gemäß Fig. 7 in einer Seitenansicht,
- Fig. 10: das Separationsmittel gemäß Fig. 7 in einer zweiten Funktionsstellung in einer perspektivischen Ansicht,
- Fig. 11: das Separationsmittel gemäß Fig. 10 in einer Frontansicht und
- Fig. 12: ein schematisches Ablaufdiagramm des erfindungsgemäßen Verfahrens.

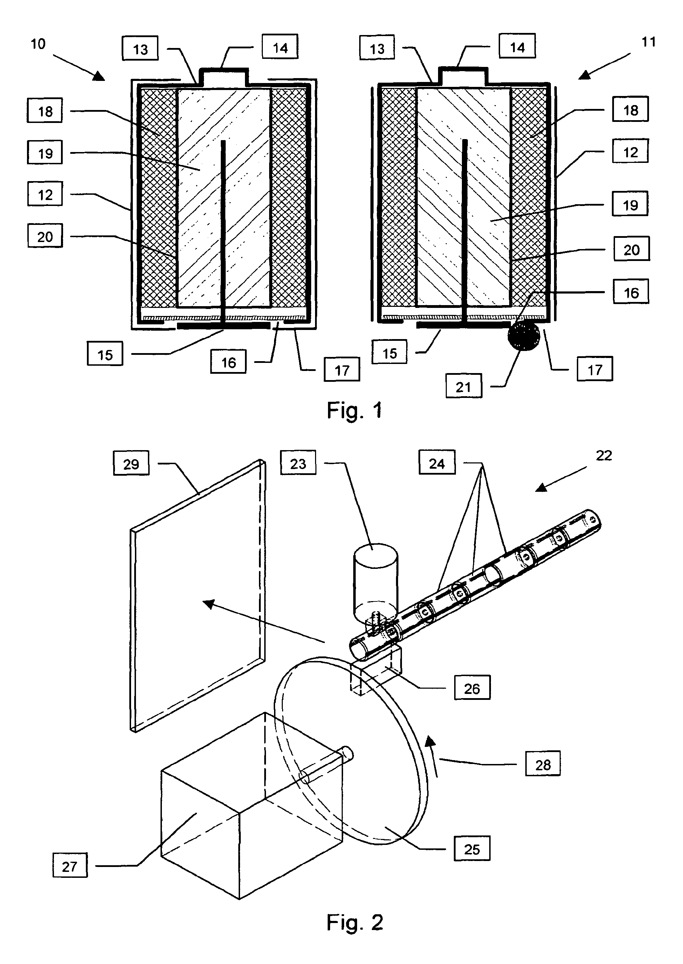

Fig. 1 zeigt einen ersten Energiespeicher 10 vor und einen zweiten Energiespeicher 11 nach dem Durchführen des erfindungsgemäßen Verfahrens im Längsschnitt. Die Energiespeicher 10, 11 weisen jeweils ein Isolierelement 12 auf, das hier als eine Kunststofffolie ausgebildet ist. Das Isolierelement 12 umgibt im Wesentlichen jeweils ein Gehäuse 13 der Energiespeicher 10, 11, wobei lediglich der Bereich eines ersten Pols 14 und der Bereich eines zweiten Pols 15 nicht von dem Isolierelement 12 abgedeckt ist. Hierbei ist der erste Pol 14 als ein Pluspol und der zweite Pol 15 als ein Minuspol ausgebildet. Des Weiteren sind die beiden nicht von dem Isolierelement 12 abgedeckten Bereiche des ersten Pols 14 und des zweiten Pols 15 an zwei voneinander abgewandt liegenden Seiten des Energiespeichers 10 beziehungsweise 11 angeordnet.

Der erste Pol 14 und der zweite Pol 15 sind aufgrund eines Spaltes 16 im Bereich eines Abschnittes 17 voneinander getrennt. Hierbei ist der Abschnitt 17 und damit auch der Spalt 16 von dem Isolierelement 12 bei dem Energiespeicher 10 abgedeckt, um während des vorgesehenen Gebrauchs des Energiespeichers 10 die Entstehung eines Kurzschlusses zu vermeiden. Das Isolierelement 12 des Energiespeichers 11 ist aufgrund der Durchführung des erfindungsgemäßen Verfahrens im Bereich der Kanten des Gehäuses 13 und hier vor allem im Bereich des Abschnittes 17 entfernt worden.

Des Weiteren weisen die Energiespeicher 10, 11 innerhalb des Gehäuses 13 eine rohrförmig an der Innenwand des Gehäuses 13 anliegende Umhüllung 18 sowie einen innerhalb der Umhüllung 18 angeordneten Kern 19 auf. Im vorliegenden Fall ist die Umhüllung 18 als eine Kathode und der Kern 19 als eine Anode sowie die Energiespeicher 10, 11 als Alkali-Mangan-Batterien ausgebildet und die Kathode 18 besteht aus Mangandioxid und die Annode 19 aus Zinkpulver. Die Kathode 18 und die Anode 19 sind mittels eines Separators 20 voneinander getrennt.

Weiter zeigt der Energiespeicher 11 im Bereich des Abschnittes 17 ein Granulatkorn 21, welches den Spalt 16 zwischen dem ersten Pol 14 und dem zweiten Pol 15 überbrückt und somit eine elektrisch leitende Verbindung herstellt. Hierbei ist im vorliegenden Fall als Material für das Granulatkorn ein mäßig elektrisch leitendes Koksgrieß ausgewählt, wodurch eine kontrollierte Entladung des Energiespeichers 11 gewährleistet ist.

Fig. 2 zeigt ein Separationsmittel 22 in einer perspektivischen Ansicht. Das Separationsmittel 22 weist einen Schlagkolben 23 auf, dem Energiespeicher 24 zugeordnet sind, wobei die Energiespeicher 24 in einer Reihe hintereinander angeordnet sind. Der Schlagkolben 23 ist über und seitlich versetzt zu einem Schwungrad 25 angeordnet. Hierbei weist das Schwungrad 25 im Bereich seines äußeren Umfanges ein Mitführelement 26 auf. Der Schlagkolben 23, das Schwungrad 25 und das Mitführelement 26 sind derart angeordnet, dass jeweils ein Energiespeicher 24 dem Mitführelement 26 zuführbar ist. Hierzu werden die Energiespeicher 24 nach Art und Größe, beispielsweise mittels einer automatisierten Sortiervorrichtung, sortiert. Darauf folgend werden die Energiespeicher 24 mittels eines Ausrichters ausgerichtet und einem Förderer, beispielsweise einem Förderband, zugeführt. Hierbei werden die Energiespeicher 24 in Längsrichtung in einer Reihe hintereinander auf dem Förderer angeordnet. Mittels des Förderers wird immer genau ein Energiespeicher 24 dem Schlagkolben 23 zugeführt.

Das Schwungrad 25 wird mittels eines elektrischen Antriebes 27 in Richtung des Pfeils 28 angetrieben. Hierbei wird mittels einer nicht näher dargestellten Steuerung gewährleistet, dass ein von dem Schlagkolben 23 in Richtung des Schwungrades 25 beförderter Energiespeicher 24 von dem Mitführelement 26 erfasst und in Richtung einer Prallplatte 29 beschleunigt wird.

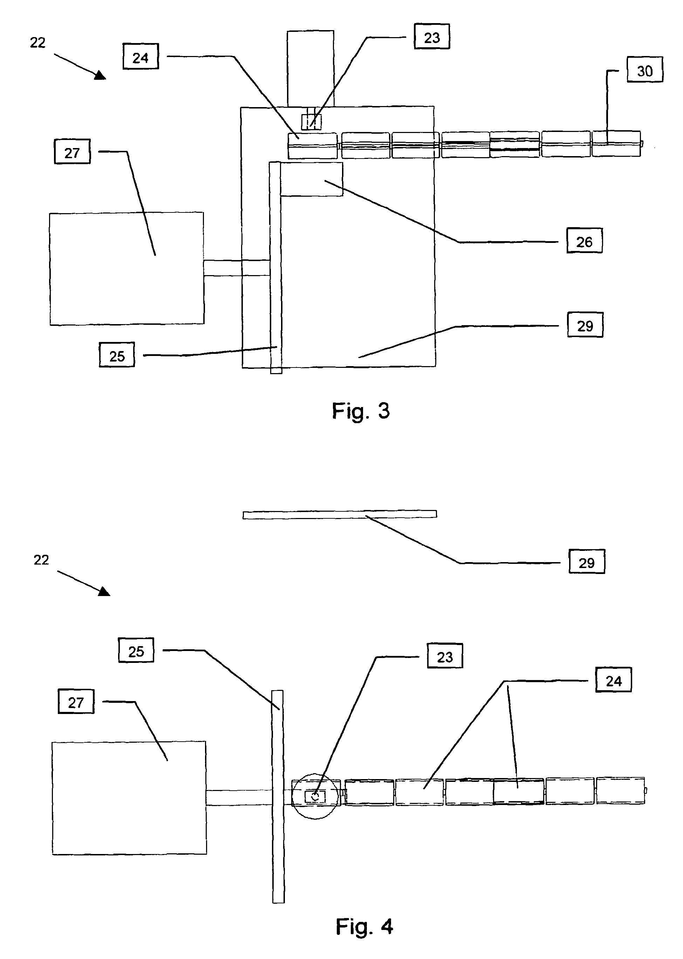

Fig. 3 und 4 zeigen das Separationsmittel 22 gemäß Fig. 2 in einer Seitendarstellung beziehungsweise einer Draufsicht. Hierbei wird deutlich, dass die Energiespeicher 24 eine Nut 30 aufweisen. Die Nut 30 ist mittels einer Säge in eine Gehäusewand des Gehäuses 13 in Längsrichtung der Energiespeicher 24 hineingesägt. Hierbei entspricht die Tiefe der Nut der Dicke der Gehäusewand. Hierdurch wird erreicht, dass lediglich das Gehäuse 13 geschwächt wird ohne die innerhalb des Gehäuses 13 angeordneten Komponenten der Energiespeicher 24, insbesondere die Kathode 18, zu beschädigen.

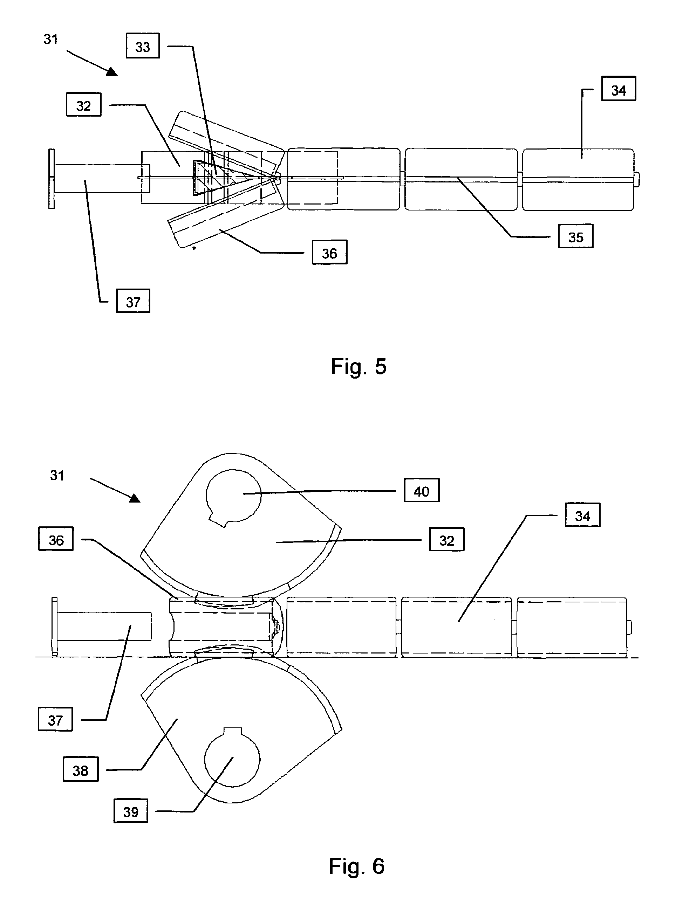

Fig. 5 und 6 zeigen ein zweites Separationsmittel 31 in einem Querschnitt beziehungsweise in einer Draufsicht. Gemäß Fig. 5 weist das Separationsmittel 31 eine Nocke 32 mit einem Keil 33 auf. Dem Keil 33 werden auf nicht näher dargestellte Weise Energiespeicher 34 zugeführt, die in Längsrichtung der Energiespeicher 34 hintereinander aufgereiht sind. Hierbei weisen die Energiespeicher 34 jeweils zwei Nuten 35 auf, die auf voneinander abgewandt liegenden Seiten des Gehäuses 36 angeordnet sind. Die Energiespeicher 34 werden dem Keil 33 derart zugeführt, dass das Gehäuse 36 im Bereich der Nut 35 aufgrund der rotierenden Bewegung der Nocke 32 aufgespaltet wird. Hierbei dringt der Keil 33 lediglich entsprechend der Tiefe der Gehäusewand des Gehäuses 36 in den Energiespeicher 34 ein. Aufgrund des Aufspaltens eines Energiespeichers 34 ist ein Kern 37 als eine Komponente von den übrigen Komponenten des Energiespeichers 34 trennbar.

Gemäß Fig. 6 weist das Separationsmittel 31 zwei einander zugewandt angeordnete Nocken 32 und 38 auf, wobei der Nocke 38 ein nicht näher dargestellter Keil entsprechend dem Keil 33 zugeordnet ist. Die Nocke 38 rotiert um eine Rotationsachse 39 und die Nocke 32 um eine Rotationsachse 40.

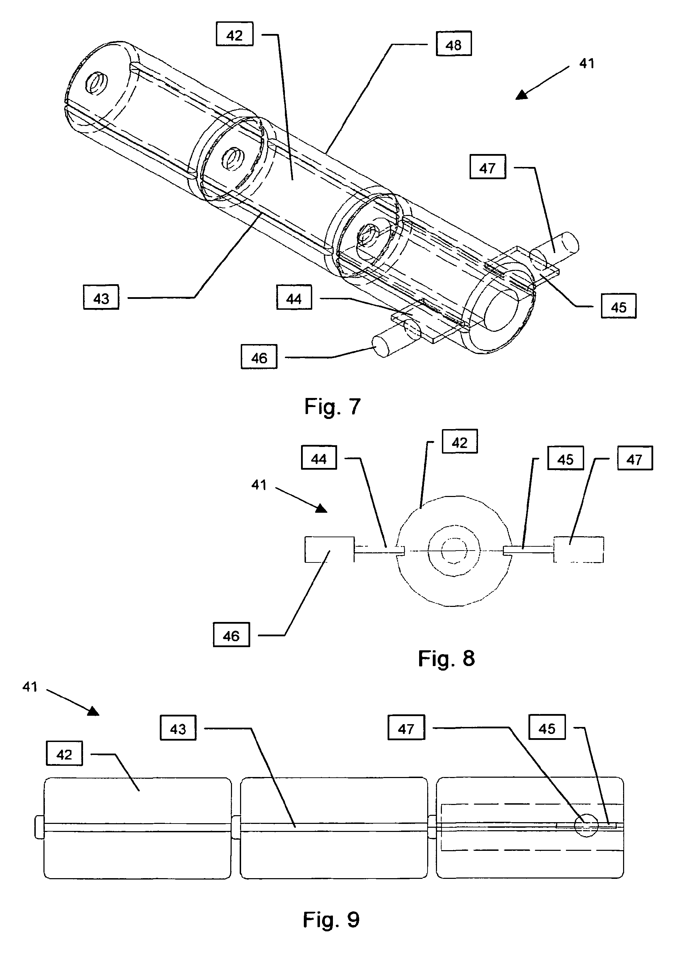

Fig. 7, 8 und 9 zeigen ein weiteres Separationsmittel 41 in drei unterschiedlichen Ansichten. Dem Separationsmittel 41 werden auf nicht näher dargestellte Weise Energiespeicher 42 zugeführt, die in Längsrichtung hintereinander aufgereiht sind und jeweils zwei Nuten 43 aufweisen, wobei die Nuten 43 auf voneinander abgewandt liegende Seiten eines Energiespeichers 42 angeordnet sind. Die Tiefe der Nuten 43 entspricht der Tiefe der Gehäusewand des Gehäuses eines Energiespeichers 42.

Das Separationsmittel 41 weist eine Spaltschaufel 44 und eine Spaltschaufel 45 auf, wobei der Spaltschaufel 44 eine Drehachse 46 und der Spaltschaufel 45 eine Drehachse 47 zugeordnet ist. Den Fig. 7, 8 und 9 ist das Separationsmittel 41 in einer ersten Funktionsstellung zu entnehmen, in der die Spaltschaufeln 44, 45 in die Nuten 43 eines Energiespeichers 42 eingeführt und parallel zu diesen ausgerichtet sind. Hierbei sind die Spaltsschaufeln 44, 45 einem freiliegenden Ende eines Energiespeichers 42 zugeordnet.

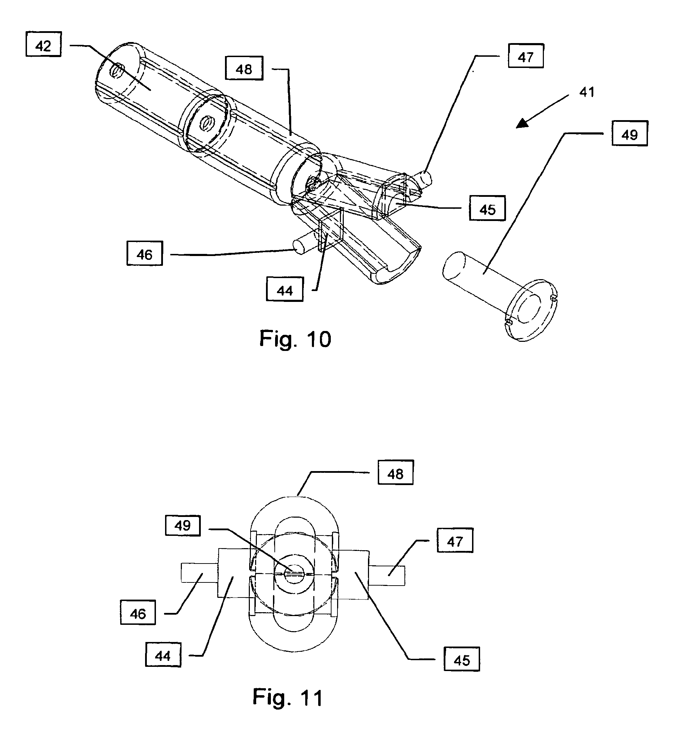

Fig. 10 und 11 ist das Separationsmittel 41 gemäß Fig. 7 bis 9 in einer zweiten Funktionsstellung zu entnehmen. Hierbei sind die Spaltschaufeln 44, 45 im Vergleich zu der Darstellung in den Fig. 7 bis 9 um 90° um die Drehachsen 46, 47 gedreht. Hierdurch ist das Gehäuse 48 des Energiespeichers 42 in zwei Teile aufgespalten. Dadurch fällt ein Kern 49 des Energiespeichers 42 aus diesem heraus.

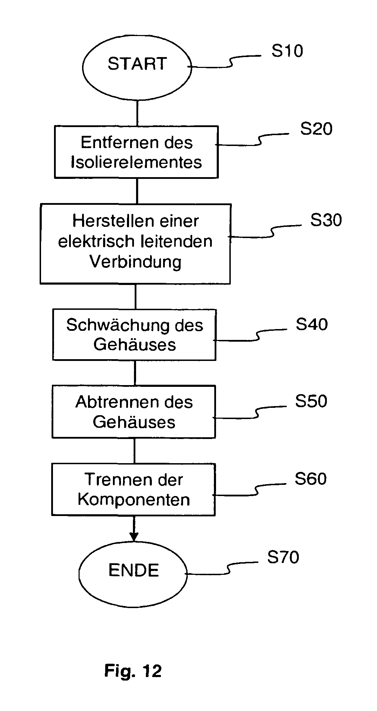

Fig. 12 zeigt eine schematische Darstellung des erfindungsgemäßen Verfahrens, welches in einem Schritt S10 gestartet wird. Sodann erfolgt in einem Schritt S20 das mindestens teilweise Entfernen des Isolierelementes in einem Abschnitt des Energiespeichers im Bereich eines Überganges von einem ersten Pol zu einem von dem ersten Pol getrennten zweiten Pol des Energiespeichers. Hiernach erfolgt in einem Schritt S30 das Herstellen einer elektrisch leitenden Verbindung zwischen dem ersten Pol und dem zweiten Pol zum kontrollierten Entladen des Energiespeichers. Nach der erfolgten, im Wesentlichen vollständigen Entladung des Energiespeichers wird in einem Schritt S40 das Gehäuse des Energiespeichers zum mechanischen Separieren wenigstens eines Teils seiner Komponenten geschwächt. Darauf folgend wird das geschwächte Gehäuse in einem Schritt S50 von den innerhalb des Gehäuses angeordneten Komponenten des Energiespeichers abgetrennt. Hierdurch zerfällt der Energiespeicher in seine einzelnen Komponenten. Die einzelnen Komponenten werden sodann in einem Schritt S60 voneinander getrennt. Anschließend wird das Verfahren in einem Schritt S70 beendet.

Nachfolgend wird die Funktionsweise des erfindungsgemäßen Verfahrens und der erfindungsgemäßen Vorrichtung anhand der Figuren 1 bis 12 näher erläutert:

Zunächst werden elektrochemische Energiespeicher 10, die einer Verarbeitung zum Wiedergewinnen einer oder mehrerer Komponenten des Energiespeichers 10 zugeführt werden sollen, eingesammelt. Die eingesammelten elektrochemischen Energiespeicher 10 werden dann in Schritt S10 einer rotierenden Trommel zugeführt, die Schleifmittel aufweist, wodurch das Isolierelement 12 in dem Abschnitt 17 im Bereich des Überganges von dem ersten Pol 14 zu dem von dem ersten Pol 14 getrennten zweiten Pol 15 abgeschliffen wird. Aufgrund eines wiederholten Sturzes auf das Schleifmittel und/oder andere Energiespeicher 10, wird in Schritt S20 das als eine Kunststofffolie ausgebildete Isolierelement 12 vorrangig an den Kanten der zylindrischen Energiespeicher 10 abgeschliffen. Hierdurch wird der Spalt 16 mindestens teilweise freigelegt.

Als nächstes wird in Schritt S30 wird ein derartig präparierter Energiespeicher 11 mit einem elektrisch leitfähigen Granulat aus Koksgrieß überschüttet. Dabei setzen sich ein oder mehrere Granulatkörner 21 in den Spalt 16 zwischen dem ersten Pol 14 und dem zweiten Pol 15. Somit wird eine elektrisch leitende Verbindung zwischen dem ersten Pol 14 und dem zweiten Pol 15 hergestellt.

Handelt es sich wie im vorliegenden Fall bei den Energiespeichern 10, 11 beispielsweise um Alkali-Manganbatterien wird beim Entladevorgang Elektrolytwasser verbraucht. Dies führt dazu, dass die Zinkoxyd-Anodenmasse 19 von einem pastösen Zustand in einen festen Zustand übergeht. Dies erleichtert die einfache mechanische Zerlegung des Energiespeichers 11.

Nach Beendigung des über mehrere Tage verlaufenden Entladevorganges werden die Energiespeicher 11 von dem Granulat getrennt und das Gehäuse 13, 36, 48 des Energiespeichers 11, 24, 34, 42 wird in Schritt S40 zum mechanischen Separieren wenigstens eines Teils seiner Komponenten geschwächt. Hierzu werden die Energiespeicher 11, 24, 34, 42 mittels einer Säge mit einer Nut 30, 35, 43 versehen. Alternativ ist es möglich, dass das Gehäuse 13, 36, 48 beispielsweise mittels Gefrieren versprödet wird. Darauf folgend wird das so geschwächte Gehäuse 13, 36, 48 in Schritt S50 von den innerhalb des Gehäuses 13, 36, 48 angeordneten Komponenten des Energiespeichers 11, 24, 34, 42 abgetrennt. Hierzu wird ein Separationsmittel 22, 31 oder 41 verwendet. Hierbei zerfällt das sprödere Manganoxid jeweils in feine Körner und kann in Schritt S60 mittels Sieben von den übrigen Komponenten des Energiespeichers 11, 24, 34, 42 getrennt werden. Das beispielsweise als Stahlmantel ausgebildete Gehäuse 13, 36, 48 des Energiespeichers 11, 24, 34, 42 kann mittels eines Magnetabscheiders entfernt werden.

Somit ist es mittels des erfindungsgemäßen Verfahrens und der erfindungsgemäßen Vorrichtung erstmalig möglich, eine mechanische Zerlegung von elektrochemischen Energiespeichern automatisiert zu realisieren und sortenreine Sekundärrohstoffe zur Verwendung von Produkten, wie beispielsweise neuen Batterien, mit geringem manuellen Aufwand zu erhalten.

### Bezugszeichenliste:

- 10: Energiespeicher
- 11: Energiespeicher
- 12: Isolierelement
- 13: Gehäuse
- 14: Erster Pol
- 15: Zweiter Pol
- 16: Spalt
- 17: Abschnitt
- 18: Umhüllung
- 19: Kern
- 20: Separator
- 21: Granulatkorn
- 22: Separationsmittel
- 23: Schlagkolben
- 24: Energiespeicher
- 25: Schwungrad
- 26: Mitführelement
- 27: Antrieb
- 28: Pfeil
- 29: Prallplatte
- 30: Nut
- 31: Separationsmittel
- 32: Nocke
- 33: Keil
- 34: Energiespeicher
- 35: Nut
- 36: Gehäuse
- 37: Kern
- 38: Nocke
- 39: Rotationsachse
- 40: Rotationsachse
- 41: Separationsmittel
- 42: Energiespeicher
- 43: Nut
- 44: Spaltschaufel
- 45: Spaltschaufel
- 46: Drehachse
- 47: Drehachse
- 48: Gehäuse
- 49: Kern

## Patentansprüche

1. Verfahren zum Verwerten eines elektrochemischen Energiespeichers (10, 11, 24, 34, 42), insbesondere einer Batterie, bei dem der Energiespeicher (10, 11, 24, 34, 42) eingesammelt wird und bei dem der Energiespeicher (10, 11, 24, 34, 42) einer Verarbeitung zum Wiedergewinnen einer oder mehrerer Komponenten des Energiespeichers (10, 11, 24, 34, 42) zugeführt wird, und vor der Verarbeitung ein Isolierelement (12) zum Abdecken eines Abschnittes (17) des Energiespeichers (10, 11, 24, 34, 42) im Bereich eines Überganges von einem ersten Pol (14) zu einem von dem ersten Pol (14) getrennten zweiten Pol (15) des Energiespeichers (10, 11, 24, 34, 42) mindestens teilweise entfernt wird, **dadurch gekennzeichnet, dass** eine elektrisch leitende Verbindung zwischen einem ersten Pol (14) und einem von dem ersten Pol (14) getrennten zweiten Pol (15) zum kontrollierten Entladen des Energiespeichers (10, 11, 24, 34, 42) hergestellt wird, wobei zum Herstellen der elektrisch leitenden Verbindung ein Granulat eingesetzt wird.

2. Verfahren nach Anspruch 1, **dadurch gekennzeichnet, dass** das Isolierelement (12) mindestens eines Energiespeichers (10, 11, 24, 34, 42) aufgrund mehrmaliger Stürze des Energiespeichers (10, 11, 24, 34, 42) auf ein Schleifmittel und/oder andere Energiespeicher (10, 11, 24, 34, 42) abgeschliffen wird, wobei vorzugsweise das Isolierelement (12) in einer rotierenden Trommel mit an der Innenumfangsfläche angeordneten Schleifmittel, insbesondere mit zusätzlichen Mitnehmerelementen und/oder Schleifelementen, abgeschliffen wird, und wobei insbesondere ein dem Abschnitt (17) zugeordneter Spalt (16) aufgrund des Entfernens des Isolierelements (12) mindestens teilweise freigelegt wird.

3. Verfahren nach Anspruch 1 oder 2, **dadurch gekennzeichnet, dass**, die elektrisch leitende Verbindung zum Erreichen einer im Wesentlichen vollständigen Entladung über mehrere Tage aufrecht erhalten wird, wobei insbesondere ein mäßig leitfähiges, Granulat, vorzugsweise aus Koksgrieß, eingesetzt wird, dass besonders bevorzugt die Körnung des Granulates entsprechend einem Spalt (16) gewählt wird, der einem Abschnitt (17) des Energiespeichers (10, 11, 24, 34, 42) im Bereich eines Überganges von einem ersten Pol (14) zu einem von dem ersten Pol (14) getrennten zweiten Pol (15) zugeordnet ist, und dass am meisten bevorzugt der Energiespeicher (10, 11, 24, 34, 42) im Wesentlichen von dem Granulat umgeben wird, wobei vorzugsweise das Granulat verdichtet wird.

4. Verfahren nach einem der vorhergehenden Ansprüche, **dadurch gekennzeichnet, dass** ein Gehäuse (13, 36, 48) des Energiespeichers (10, 11, 24, 34, 42) zum mechanischen Separieren wenigstens eines Teils seiner Komponenten geschwächt wird, wobei vorzugsweise mindestens eine Nut (30, 35, 43) und/oder ein Schlitz in Längsrichtung des Energiespeichers (10, 11, 24, 34, 42), insbesondere auf zwei voneinander abgewandt liegenden Seiten des Energiespeichers (10, 11, 24, 34, 42), in einer Gehäusewand des Gehäuses (13, 36, 48) hergestellt wird, und/oder die Gehäusewand des Energiespeichers (10, 11, 24, 34, 42) mindestens teilweise angeschnitten, aufgetrennt, durchstanzt und/oder aufgefräst wird, und/oder das Gehäuse (13, 36, 48) versprödet wird.

5. Verfahren nach einem der vorhergehenden Ansprüche, **dadurch gekennzeichnet, dass** der Energiespeicher (10, 11, 24, 34, 42) gefroren, insbesondere schockgefroren, wird.

6. Verfahren nach Anspruch 4 oder 5, **dadurch gekennzeichnet, dass** das Gehäuse (13, 36, 48) von den innerhalb des Gehäuses (13, 36, 48) angeordneten Komponenten des Energiespeichers (10, 11, 24, 34, 42) abgetrennt wird, wobei vorzugsweise der Energiespeicher (10, 11, 24, 34, 42) in seine Komponenten zerfällt, und wobei insbesondere der Energiespeicher (10, 11, 24, 34, 42) zum Abtrennen des Gehäuses (13, 36, 48) einem Kraftstoß, insbesondere zum abrupten Beschleunigen und/oder zum abrupten Abstoppen des Energiespeichers (10, 11, 24, 34, 42), ausgesetzt wird.

7. Verfahren nach einem der Ansprüche 4 bis 6, **dadurch gekennzeichnet, dass** das Gehäuse (13, 36, 48) des Energiespeichers (10, 11, 24, 34, 42), insbesondere entlang der mit einer Nut (30, 35, 43) und/oder einem Schlitz versehenen Gehäusewand, mittels eines Spaltelementes von den innerhalb des Gehäuses (13, 36, 48) angeordneten Komponenten abgelöst wird, wobei vorzugsweise das Ablösen des Gehäuses (13, 36, 48) mittels Aufbrechen, Aufbiegen und/oder Aufbördeln der Gehäusewand realisiert wird.

8. Verfahren nach Anspruch 6 oder 7, **dadurch gekennzeichnet, dass** die Komponenten mittels eines Trennmittels und/oder Abscheidmittels voneinander getrennt werden.

9. Vorrichtung zum Verwerten eines elektrochemischen Energiespeichers (10, 11, 24, 34, 42), insbesondere einer Batterie, mit einem Abschnitt (17) im Bereich eines Überganges von einem ersten Pol (14) zu einem von dem ersten Pol (14) getrennten zweiten Pol (15) des Energiespeichers (10, 11, 24, 34, 42), wobei der Abschnitt (17) mittels eines Isolierelementes (12) abgedeckt ist, und in der vorrichtung ein Entfernungsmittel zum mindestens teilweisen Entfernen des Isolierelementes (12) im Bereich des Abschnittes (17) vorgesehen ist, **gekennzeichnet dadurch daß** die vorrichtung eine Entladeaufnahme zum Aufnehmen eines oder mehrerer Energiespeicher (10, 11, 24, 34, 42) besitzt und die Entlade-aufnahme ein elektrisch leitfähiges Granulat enthält.

10. Vorrichtung nach Anspruch 9, **dadurch gekennzeichnet, dass** das Entfernungsmittel als eine rotierbare Trommel mit einem an der Innenumfangsfläche der Trommel angeordneten Schleifmittel ausgebildet ist, wobei vorzugsweise das Entfernungsmittel innerhalb der Trommel Mitnehmerelemente und/oder Schleifelemente aufweist.

11. Vorrichtung nach Anspruch 9 oder 10, **dadurch gekennzeichnet, dass** der Entladeaufnahme ein Verdichtungsmittel, insbesondere ein Rüttelelement und/oder eine Druckplatte, zum Verdichten des Granulats zugeordnet ist.

12. Vorrichtung nach einem der Ansprüche 9 bis 11, **gekennzeichnet durch** ein Präparationsmittel zum Schwächen des Gehäuses (13, 36, 48) des Energiespeichers (10, 11, 24, 34, 42), wobei das Präparationsmittel vorzugsweise als ein Auftrennelement, insbesondere eine Säge, eine Fräse, eine Klinge, eine Stanze und/oder ein Laser, zum mindestens teilweisen Anschneiden, Auftrennen, Durchstanzen und/oder Auffräsen der Gehäusewand des Gehäuses (13, 36, 48) des Energiespeichers (10, 11, 24, 34, 42) ausgebildet ist, und/oder wobei das Präparationsmittel besonders bevorzugt als ein Gefrierelement zum Gefrieren, insbesondere Schockgefrieren, des Energiespeichers (10, 11, 24, 34, 42) ausgebildet ist.

13. Vorrichtung nach Anspruch 12, **gekennzeichnet durch** ein Separationsmittel (22, 31, 41) zum Abtrennen des Gehäuses (13, 36, 48) von den innerhalb des Gehäuses (13, 36, 48) angeordneten Komponenten des Energiespeichers (10, 11, 24, 34, 42), wobei das Separationsmittel (22, 31, 41) vorzugsweise als ein Kraftstoßgeber, insbesondere als ein Beschleunigungselement und/oder eine Prallplatte (29), zum Abtrennen des Gehäuses (13, 36, 48) ausgebildet ist, wobei das Beschleunigungselement vorzugsweise als ein, insbesondere elektrisch angetriebenes, Schwungrad (25) ausgebildet ist, wobei vorzugsweise an dem Schwungrad (25) ein Mitführelement (26) zum Beschleunigen des Energiespeichers (10, 11, 24, 34, 42) angeordnet ist, und/oder wobei das Beschleunigungselement ein Zuführelement, insbesondere einen Schlagkolben (23), zum Zuführen des Energiespeichers (10, 11, 24, 34, 42) in Richtung des Schwungrades (25) aufweist.

14. Vorrichtung nach Anspruch 13, **dadurch gekennzeichnet, dass** das Separationsmittel (22, 31, 41) als ein Spaltelement zum Ablösen des Gehäuses (13, 36, 48) von den innerhalb des Gehäuses (13, 36, 48) angeordneten Komponenten des Energiespeichers (10, 11, 24, 34, 42) entlang der mindestens teilweise angeschnittenen, aufgetrennten, durchstanzten und/oder aufgefrästen Gehäusewand ausgebildet ist, wobei das Spaltelement vorzugsweise als ein, insbesondere an einer rotierenden Nocke (32, 38) angeordneter, Keil (33) oder als eine drehbare Spaltschaufel (44, 45) ausgebildet ist.

15. Vorrichtung nach Anspruch 13 oder 14, **gekennzeichnet durch** ein Trennmittel, insbesondere ein Sieb, und/oder ein Abscheidmittel, insbesondere einen Magnetabscheider, zum Trennen mindestens einer ersten Komponente und/oder einer zweiten Komponente von den übrigen Komponenten des Energiespeichers (10, 11, 24, 34, 42).

16. Verwendung einer nach dem Verfahren gemäß einem der Ansprüche 1 bis 8 und/oder mittels der Vorrichtung nach einem der Ansprüche 9 bis 15 erhaltenen Komponente zum Herstellen von Produkten, insbesondere Batterien.

## Claims

1. Method for recycling an electrochemical energy storage device (10, 11, 24, 34, 42), in particular a battery, in which method the energy storage device (10, 11, 24, 34, 42) is collected and in which the energy storage device (10, 11, 24, 34, 42) is processed in order to recover one or more components of the energy storage device (10, 11, 24, 34, 42), and prior to the processing an insulating element (12) for covering a section (17) of the energy storage device (10, 11, 24, 34, 42) is at least partially removed in the area of a junction from a first terminal (14) to a second terminal (15) that is separate from the first terminal (14) of the energy storage device (10, 11, 24, 34, 42), **characterised in that** an electrically conducting connection between a first terminal (14) and a second terminal (15) that is separate from the first terminal (14) is produced for the controlled discharge of the energy storage device (10, 11, 24, 34, 42), wherein a granulate is employed for producing the electrically conducting connection.

2. Method according to claim 1, **characterised in that** the insulation element (12) of at least one energy storage device (10, 11, 24, 34, 42) is abraded as a result of repeated falls of the energy storage device (10, 11, 24, 34, 42) onto an abrasive and/or other energy storage devices (10, 11, 24, 34, 42), wherein the insulation element (12) is preferably abraded in a rotating drum with abrasives arranged on the interior peripheral surface, in particular with additional baffles and/or abrasive elements, and wherein in particular a gap (16) associated with the section (17) is at least partially laid open as a result of the insulation element (12) being removed.

3. Method according to claim 1 or 2, **characterised in that** the electrically conducting connection is maintained for a plurality of days in order to attain an essentially complete discharge, wherein in particular a moderately conductive granulate is employed, preferably of coke grit, particularly preferably selected with a grain size to correspond to a gap (16) that is associated with a section (17) of the energy storage device (10, 11, 24, 34, 42) in the area of a junction from a first terminal (14) to a second terminal (15) that is separate from the first terminal (14) of the energy storage device (10, 11, 24, 34, 42), and that most preferably the energy storage device (10, 11, 24, 34, 42) is essentially surrounded by the granulate, wherein the granulate is preferably compacted.

4. Method according to one of the preceding claims, **characterised in that** a housing (13, 36, 48) of the energy storage device (10, 11, 24, 34, 42) is weakened in order to separate at least a part of its components, wherein preferably at least one groove (30, 35, 43) and/or a slit in the longitudinal axis of the energy storage device (10, 11, 24, 34, 42) is produced in a housing wall of the housing (13, 36, 48), in particular on two opposite facing sides of the energy storage device (10, 11, 24, 34, 42), and/or the housing wall of the energy storage device (10, 11, 24, 34, 42) is at least partially cut, separated, punched through and/or milled out, and/or the housing (13, 36, 48) is embrittled.

5. Method according to one of the preceding claims, **characterised in that** the energy storage device (10, 11, 24, 34, 42) is frozen, in particular shock-frozen.

6. Method according to claim 4 or 5, **characterised in that** the housing (13, 36, 48) is separated from the components located inside the housing (13, 36, 48) of the energy storage device (10, 11, 24, 34, 42), wherein the energy storage device (10, 11, 24, 34, 42) preferably disintegrates into its components, and wherein in particular the energy storage device (10, 11, 24, 34, 42) is subjected to an impact force, in particular to an abrupt acceleration and/or to an abrupt stop of the energy storage device (10, 11, 24, 34, 42), in order to separate the housing (13, 36, 48).

7. Method according to one of claims 4 to 6, **characterised in that** the housing (13, 36, 48) of the energy storage device (10, 11, 24, 34, 42), is detached from the components located inside the housing (13, 36, 48) by means of a splitting element, in particular along the housing wall that is provided with a groove (30, 35, 43) and/or a slit, wherein the housing (13, 36, 48) is preferably detached by breaking open, bending open and/or flaring open the housing wall.

8. Method according to claim 6 or 7, **characterised in that** the components are separated from each other by means of a separation means and/or a separator.

9. Device for recycling an electrochemical energy storage device (10, 11, 24, 34, 42), in particular a battery, with a section (17) in the area of a junction from a first terminal (14) to a second terminal (15) that is separated from the first terminal (14) of the energy storage device (10, 11, 24, 34, 42), wherein the section (17) is covered by an insulation element (12), and the device is provided with a removal means for at least partially removing the insulation element (12) in the area of the section (17), **characterised in that** the device possesses an unloader for accommodating one or more energy storage devices (10, 11, 24, 34, 42) and the unloader comprises an electrically conductive granulate.

10. Device according to claim 9, **characterised in that** the removal means is designed as a rotatable drum with an abrasive arranged on the interior peripheral surface, wherein the removal means preferably possesses baffles and/or abrasive elements inside the drum.

11. Device according to claim 9 or 10, **characterised in that** a compaction means, in particular a vibrating element and/or a pressure plate, is associated with the unloader for compressing the granulate.

12. Device according to one of claims 9 to 11, **characterised by** a preparation means for weakening the housing (13, 36, 48) of the energy storage device (10, 11, 24, 34, 42), wherein the preparation means is preferably constructed as a separating element, in particular a saw, a cutter, a blade, a punch and/or a laser, for at least partially cutting up, separating, punching through and/or milling the housing wall of the housing (13, 36, 48) of the energy storage device (10, 11, 24, 34, 42), and/or wherein the preparation means is particularly preferably constructed as a freezing element for freezing, in particular shock-freezing the energy storage device (10, 11, 24, 34, 42).

13. Device according to claim 12, **characterised by** a separation means (22, 31, 41) to separate the housing (13, 36, 48) from the components located inside the housing (13, 36, 48) of the energy storage device (10, 11, 24, 34, 42), wherein the separation means (22, 31, 41) is preferably constructed as an impact force supplier, in particular as an accelerating element and/or a baffle plate (29), for separating the housing (13, 36, 48), wherein the accelerating element is preferably constructed, in particular, as an electrically driven flywheel (25), wherein an entrainment element (26) for accelerating the energy storage device (10, 11, 24, 34, 42) is preferably arranged on the flywheel (25), and/or wherein the accelerating element possesses a transfer element, in particular a plunger (23), for transferring the energy storage device (10, 11, 24, 34, 42) towards the flywheel (25).

14. Device according to claim 13, **characterised in that** the separation means (22, 31, 41) is constructed as a splitting element for detaching the housing (13, 36, 48) from the components of the energy storage device (10, 11, 24, 34, 42) located inside the housing (13, 36, 48) along the at least partially cut, separated, punched and/or milled open housing wall, wherein the splitting element is preferably constructed, in particular, as a wedge (33) arranged on a rotating cam (32, 38) or as a rotatable splitting blade (44, 45).

15. Device according to claim 13 or 14, **characterised by** a separator, in particular a sieve, and/or a separation means, in particular a magnetic separator, for separating at least a first component and/or a second component from the other components of the energy storage device (10, 11, 24, 34, 42).

16. Use of a component, obtained according to the method according to one of claims 1 to 8 and/or by means of the device according to one of claims 9 to 15, for the production of products, in particular batteries.

## Revendications

1. Procédé à recycler un accumulateur d'énergie électrochimique (10, 11, 24, 34, 42), en particulier une batterie de piles, dans lequel on recueille ledit accumulateur d'énergie (10, 11, 24, 34, 42) et amène ledit accumulateur d'énergie (10, 11, 24, 34, 42) à un processus de transformation pour la récupération d'un ou plusieurs composants dudit accumulateur d'énergie (10, 11, 24, 34, 42), et dans lequel on enlève, au moins en partie, un élément isolant (12) pour le recouvrement d'une partie (17) dudit accumulateur d'énergie (10, 11, 24, 34, 42) dans la zone d'un passage d'un premier pôle (14) à un deuxième pôle (15) séparé dudit premier pôle dudit accumulateur d'énergie (10, 11, 24, 34, 42) avant la transformation, **caractérisé en ce qu'**une connexion électro conductrice est établie entre un premier pôle (14) et un deuxième pôle (15) séparé dudit premier pôle (14) pour la décharge contrôlée dudit accumulateur d'énergie (10, 11, 24, 34, 42), dans lequel un granulat est utilisé pour l'établissement de la connexion électro conductrice.

2. Procédé selon la revendication 1, **caractérisé en ce que** ledit élément isolant (12) d'au moins un accumulateur d'énergie (10, 11, 24, 34, 42) est meulé par chutes répétées dudit accumulateur d'énergie (10, 11, 24, 34, 42) sur un produit abrasif et/ou sur des autres accumulateurs d'énergie (10, 11, 24, 34, 42), dans lequel, de préférence, ledit élément isolant (12) est meulé dans un tambour rotatif à un produit abrasif répandue sur la surface circonférentielle intérieure, en particulier aux éléments entraîneurs additionnels et/ou des éléments abrasifs additionnels, et dans lequel, en particulier, une fente (16) affecté à la partie (17) est exposée, au moins en partie, en vertu de l'enlèvement dudit élément isolant (12).

3. Procédé selon la revendication 1 ou 2, **caractérisé en ce que** ladite connexion électro conductrice est maintenue pour plusieurs jours afin d'achever une décharge essentiellement complète, à utilisation, en particulier, d'un granulat à conductivité modérée, de préférence en grossier de coke, et **en ce que**, de préférence particulière, la granularité dudit granulat est choisie en correspondance avec une fente (16) affectée à une partie (17) de l'accumulateur d'énergie (10, 11, 24, 34, 42) dans la zone d'un passage d'un premier pôle (14) à un deuxième pôle (15) séparé dudit premier pôle (14), et en ce, de préférence la plus particulière, ledit accumulateur d'énergie (10, 11, 24, 34, 42) est entouré essentiellement dudit granulat, de préférence à compactage du granulat.

4. Procédé selon une quelconque des revendications précédentes, **caractérisé en ce qu'**un carter (13, 36, 48) dudit accumulateur d'énergie (10, 11, 24, 34, 42) est affaibli pour la séparation mécanique d'au moins une partie de ses composants, de préférence à formation d'au moins une rainure (30, 35, 43) et/ou d'une fente en sens longitudinal dudit accumulateur d'énergie (10. 11, 24, 34, 42), en particulier aux deux côtés dudit accumulateur d'énergie (10, 11, 24, 34 42) qui sont opposés l'un de l'autre, dans une paroi de carter dudit carter (13, 36, 48), et/ou à ouverture par coupage, séparation, poinçonnage et/ou ouverture par fraisage, au moins en partie, de ladite paroi dudit accumulateur d'énergie (10, 11, 24, 34, 42), et/ou à fragilisation dudit carter (13, 36, 48).

5. Procédé selon une quelconque des revendications précédentes, **caractérisé en ce que** ledit accumulateur d'énergie (10, 11, 24, 34, 42) est congelé, en particulier à congélation ultrarapide.

6. Procédé selon la revendication 4 ou 5, **caractérisé en ce que** ledit carter (13, 36, 48) est séparé des composants dudit accumulateur d'énergie (10, 11, 24, 34, 42), qui sont disposés à l'intérieur du dernier, de préférence à désintégration dudit accumulateur d'énergie (10, 11, 24, 34, 42) en ses composants et, en particulier, audit accumulateur d'énergie (10, 11, 24, 34, 42) étant exposé à une impulsion pour la séparation dudit carter (13, 36, 48), en particulier pour l'accélération brusque et/ou pour l'arrêt brusque dudit accumulateur d'énergie (10, 11, 24, 34, 42).

7. Procédé selon une quelconque des revendications 4 à 6, **caractérisé en ce que** ledit carter (13, 36, 48) dudit accumulateur d'énergie (10, 11, 24, 34, 42) est détaché desdits composants disposés à l'intérieur dudit carter (13, 36, 48), en particulier le long de ladite paroi de carter pourvue d'une rainure (30, 35, 43) et/ou d'une fente, moyennant un élément de clivage, de préférence à réalisation du détachement du carter (13, 36, 48) par ouvrage de force, dépliage et/ou ouvrage par repliage de ladite paroi de carter.

8. Procédé selon la revendication 6 ou 7, **caractérisé en ce que** lesdits composants sont séparés l'un de l'autre moyennant un agent de séparation et/ou un agent d'extraction.

9. Dispositif à recycler un accumulateur d'énergie électrochimique (10, 11, 24, 34, 42), en particulier une batterie de piles, à une partie (17) dans la zone d'un passage d'un premier pôle (14) à un deuxième pôle (15) séparé dudit premier pôle (14) dudit accumulateur d'énergie (10, 11, 24, 34, 42), dans lequel ladite partie (17) est recouverte moyennant un élément isolant (12), et un moyen d'enlèvement est pourvu pour l'enlèvement, au moins en partie, dudit élément isolant (12) dans la zone de ladite partie (17), **caractérisé en ce que** le dispositif présente un récepteur déchargeur à recevoir un ou plusieurs accumulateurs d'énergie (10, 11, 24, 34, 42) et **en ce que** ledit récepteur déchargeur contient un granulat électro conducteur.

10. Dispositif selon la revendication 9, **caractérisé en ce que** ledit moyen d'enlèvement est configuré sous forme d'un tambour rotatif à un produit abrasif disposé à la surface circonférentielle intérieure dudit tambour, dans lequel, de préférence, ledit moyen d'enlèvement présente des éléments entraîneurs et/ou des éléments abrasifs à l'intérieur dudit tambour

11. Dispositif selon la revendication 9 ou 10, **caractérisé en ce qu'**un moyen de compactage, en particulier un élément vibrateur et/ou une plaque de compression, est affecté audit récepteur déchargeur pour le compactage dudit granulat.

12. Dispositif selon une quelconque des revendications 9 à 11, **caractérisé par** un moyen de préparation pour l'affaiblissement dudit carter (13, 36, 48) dudit accumulateur d'énergie (10, 11, 24, 34, 42), dans lequel ledit moyen de préparation est configuré, de préférence, sous forme d'un élément de séparation, en particulier d'une scie, d'une fraiseuse, d'une lame, d'une presse de découpage ou poinçonneuse et/ou d'un laser, pour l'ouverture par coupage, séparation, poinçonnage et/ou ouverture par fraisage, au moins en partie, de ladite paroi dudit accumulateur d'énergie (10, 11, 24, 34, 42), et/ou dans lequel ledit moyen de préparation est configuré, de préférence particulière, sous forme d'un élément de congélation à congeler, en particulier par congélation ultrarapide, dudit accumulateur d'énergie (10, 11, 24, 34, 42).

13. Dispositif selon la revendication 12, **caractérisé par** un moyen de séparation (22, 31, 42) à séparer ledit carter (13, 36, 48) desdits composants dudit accumulateur d'énergie (10, 11, 24, 34, 42), qui sont disposés à l'intérieur dudit carter (13, 36, 48), dans lequel ledit moyen de séparation (22, 31, 41) est configuré, de préférence, sous forme d'un générateur d'impulsions, en particulier sous forme d'un élément accélérateur et/ou sous forme d'une surface de rebondissement (29) pour la séparation dudit carter (13, 36, 48), dans lequel ledit élément accélérateur est configuré, de préférence, sous forme d'une roue volante (25) entrainée, en particulier, en mode électrique, dans lequel, de préférence, un élément entraîneur (26) est disposé à ladite roue volante (25) pour l'accélération dudit accumulateur d'énergie (10, 11, 24, 34, 42), et/ou dans lequel ledit élément accélérateur comprend un élément d'amenée, en particulier un piston frappeur (23), pour l'amenée dudit accumulateur d'énergie (10, 11, 24, 34, 42) en une direction vers ladite roue volante (25).

14. Dispositif selon la revendication 13 **caractérisé en ce que** ledit moyen de séparation (22, 31, 41) est configuré sous forme d'un élément de clivage pour le détachement dudit carter (13, 36, 48) desdits composants dudit accumulateur d'énergie (10, 11, 24, 34, 42), qui sont disposés à l'intérieur dudit carter (13, 36, 48), le long de ladite paroi de carter qui est ouverte, au moins en partie, par coupage, séparation, poinçonnage et/ou fraisage, dans lequel ledit élément de clivage est configuré, de préférence, sous forme d'un coin (33) disposé à une came rotative (32, 38) ou sous forme d'une palette de clivage rotative (44, 45).

15. Dispositif selon la revendication 13 ou 14, **caractérisé par** un moyen séparateur, en particulier un tamis, et/ou d'un moyen d'extraction, en particulier un séparateur magnétique, pour la séparation d au moins un premier composant et/ou d'un deuxième composants des autres composants dudit accumulateur d'énergie (10, 11, 24, 34, 42).

16. Utilisation d'un composant pour la fabrication de produits, en particulier des batteries de piles, lequel est obtenu selon le procédé selon une quelconque des revendications 1 à 8 etlou moyennant le dispositif selon une quelconque des revendications 9 à 15.
